# EUROPÄISCHE PATENTSCHRIFT

(11) **EP 3 167 209 B1**
(45) Veröffentlichungstag und Bekanntmachung des Hinweises auf die Patenterteilung: **14.04.2021**
(21) Anmeldenummer: 15742196.7
(22) Anmeldetag: 10.07.2015
(51) Int. Cl.: G05G 23/00, G05G 1/04, F16H 59/10, F16H 59/04, F16H 61/24

(54) **STELLGLIED, INSBESONDERE FÜR EIN KRAFTFAHRZEUG**
CONTROL ELEMENT, IN PARTICULAR FOR A MOTOR VEHICLE
ÉLÉMENT DE COMMANDE, DESTINÉ EN PARTICULIER À UN VÉHICULE AUTOMOBILE

(30) Priorität: 10.07.2014 DE 102014010191
(43) Veröffentlichungstag der Anmeldung: 17.05.2017
(73) Patentinhaber: Marquardt GmbH, 78604 Rietheim-Weilheim (DE)
(72) Erfinder: HALLER, Peter, 78582 Balgheim (DE); BERCHTOLD, Rainer, 78532 Tuttlingen-Nendingen (DE)
(74) Vertreter: Jostarndt Patentanwalts-AG
(86) Internationale Anmeldenummer: PCT/EP2015/065809
(87) Internationale Veröffentlichungsnummer: WO 2016/005554

(56) Entgegenhaltungen:
- EP-A2- 1 980 771
- US-A- 5 339 705

## Beschreibung

Die Erfindung betrifft ein Stellglied nach dem Oberbegriff des Patentanspruchs 1.

Stellglieder, wie in der Art eines Joystick- und/oder Cursor-Schalters ausgebildete elektrische und/oder elektronische Schaltvorrichtungen, dienen zur manuellen Ansteuerung und/oder Auslösung von Funktionen in einem Kraftfahrzeug. Unter anderem werden solche Schaltvorrichtungen zur Eingabe von Daten für ein elektrisches Gerät durch einen Benutzer verwendet, beispielsweise bei Autoradios, Navigationsgeräten, Bordcomputer o. dgl. Geräten im Kraftfahrzeug. Insbesondere lässt sich ein solches Stellglied auch als elektronischer Gangwahlschalter für ein durch Shift-by-Wire gesteuertes Getriebe im Kraftfahrzeug verwenden.

Ein solches Stellglied weist eine Handhabe auf, die beispielsweise in der Art eines Wählhebels ausgebildet sein kann. Die Handhabe ist an einem Träger bewegbar gelagert, derart dass die Handhabe in wenigstens eine Richtung manuell aus einer neutralen Stellung verstellbar ist. Die Verstellung der Handhabe kann gegebenenfalls bis in eine Verstellposition erfolgen. Mit der Handhabe wirkt ein in einer Kulissenbahn einer Kulisse geführtes sowie mit einer elastischen Kraft beaufschlagtes Druckelement zusammen. Dadurch wirkt insbesondere eine Rückstellkraft in Richtung der neutralen Stellung auf die Handhabe bei deren Verstellung ein. Es hat sich bei einem solchen Stellglied herausgestellt, dass die Handhabe ein gewisses Spiel, insbesondere in der neutralen Stellung, aufweist.

Ein solches Stellglied ist auch aus der US 5 339 705 A bekannt. Zur Verhinderung von Anschlaggeräuschen der Handhabe am Gehäuse des Stellgliedes während des Fahrbetriebes des Fahrzeugs ist ein auf die Handhabe einwirkendes Mittel vorgesehen, derart dass die Handhabe in der Kulisse zur Verringerung des Bewegungsspiels der Handhabe verspannt ist und an einem Gehäuseteil anliegt. Ein weiteres Stellglied, bei dem Vibrationen der Handhabe verringert sind, ist in der EP 1 980 771 A2 beschrieben.

Der Erfindung liegt die Aufgabe zugrunde, das Stellglied derart weiterzuentwickeln, dass das Spiel der Handhabe, insbesondere in der neutralen Stellung, weiter verringert ist. Insbesondere soll die Handhabe vom Benutzer möglichst spielfrei zu betätigen sein sowie deren neutrale Stellung (Nulllage) soll ein möglichst kleines Spiel aufweisen.

Diese Aufgabe wird bei einem gattungsgemäßen Stellglied durch die kennzeichnenden Merkmale des Anspruchs 1 gelöst.

Beim erfindungsgemäßen Stellglied ist das auf die Handhabe verspannend einwirkende Mittel als eine Nocke ausgebildet, wobei die Nocke in der Kulisse befindlich ist. Die Nocke ist weiter an einer Kulissenwand der Kulisse befindlich, und zwar der Kulissenbahn gegenüberliegend. Ein solches Stellglied bietet dem Benutzer vorteilhafterweise eine besonders ergonomische Bedienung. Insbesondere bietet es sich dabei an, dass die Nocke in der neutralen Stellung zur Verringerung des Bewegungsspiels derart auf die Handhabe einwirkt, dass die Handhabe in Richtung der Verstellung und/oder zur Verstellposition verspannt ist. Weitere Ausgestaltungen der Erfindung sind Gegenstand der Unteransprüche.

Zwecks weiterer Steigerung der Ergonomie für die Bedienung des Stellglieds durch den Benutzer kann es sich bei der Verstellbewegung um eine Schwenkbewegung der Handhabe handeln. Die Handhabe kann um eine erste und/oder eine zweite Schwenkachse in eine erste und/oder eine zweite Schwenkrichtung verstellbar sein. Bevorzugterweise kann es sich bei der Handhabe um einen schwenkbaren Wählhebel handeln. In kompakter Ausgestaltung kann der Träger für die Handhabe als ein Kreuzgelenk, insbesondere in der Art eines Kardangelenks, ausgebildet sein.

Zum Schutz des Stellglieds kann ein Gehäuse vorgesehen sein. Das Stellglied bildet somit eine vormontierbare Baueinheit. In einfacher Art und Weise kann die Handhabe eine im Träger schwenkbar gelagerte Schaltwelle umfassen. Die Schaltwelle kann desweiteren aus dem Gehäuse zur manuellen Bedienung der Handhabe durch den Benutzer herausragen.

In kompakter sowie funktionssicherer Ausgestaltung kann die Schaltwelle mittels eines Lagerstifts bewegbar im Kreuz- und/oder Kardangelenk gelagert sein. Das Kreuz- und/oder Kardangelenk kann wiederum mittels Zapfen und/oder Lagerschalen beweglich im Gehäuse gelagert sein. Zweckmäßigerweise können die Lagerstellen für den Lagerstift und/oder für das Kreuz- und/oder Kardangelenk in fertigungstechnisch einfacher Art und Weise als Spielpassungen ausgestaltet sein. Aufgrund des Zusammenwirkens der Nocke mit der Schaltwelle ist dennoch eine im wesentlichen spielfreie Bedienung des Stellglieds für den Benutzer gegeben.

In kompakter Ausgestaltung kann in der Schaltwelle ein Führungskanal für ein elastisches Element zur Ausübung der elastischen Kraft sowie für das Druckelement befindlich sein. Das elastische Element kann aus einer Druckfeder bestehen. Weiterhin kann es sich bei dem Druckelement um einen Stift, einen Taster, einen Zapfen o. dgl. handeln.

In kostengünstiger Weise kann die Kulisse aus thermoplastischem Kunststoff bestehen. Es kann sich dann zwecks einfacher Herstellung anbieten, dass die Nocke an der Kulissenwand bei Herstellung der Kulisse mittels Spritzgießen angespritzt ist. Desweiteren kann es sich anbieten, dass die Kulissenbahn eine 3D(dreidimensionale)-Kontur zur Erzeugung einer Haptik für die Verstellung der Handhabe aufweist, wobei eine solche an sich komplex gestaltete Kulisse dennoch in einfacher Art und Weise durch Spritzgießen herstellbar ist. Beim Stellglied kann weiterhin ein Mittel zur Erfassung der Verstellung und/oder der Verstellposition vorgesehen sein. Zweckmäßigerweise kann das Mittel zur Erfassung der Verstellung und/oder der Verstellpositionen einen die Verstellung und/oder die Verstellpositionen codierenden Code-Träger sowie einen die Codierung ermittelnden Sensor umfassen. In kompakter Art können dabei sämtliche Verstellpositionen mittels des einen einzigen Code-Trägers erfassbar sein. In kostengünstiger Art und Weise können der Code-Träger aus einer magnetischen Code-Platte, die insbesondere verschiedene, voneinander unterscheidbare Magnetfelder enthält, sowie der Sensor aus einem Magnetsensor, insbesondere aus mehreren Hallsensoren, an denen bei einer Verschiebung der Codeplatte eine Signalumkehrung auftritt, bestehen. In kompakter Ausgestaltung kann der Code-Träger über ein Führungsbauteil an der Schaltwelle gelagert sein, so dass der Code-Träger mittels der Handhabe korrespondierend zur Verstellung der Handhabe bewegbar ist. Der

### (weiter mit Seite 4, Zeile 1 der ursprünglichen Unterlagen)

Einfachheit halber kann es sich anbieten, dass die Hallsensoren auf einer im Gehäuse gelagerten Leiterplatte angebracht sind.

Für eine besonders bevorzugte Ausgestaltung der Erfindung ist nachfolgendes festzustellen.

Es soll ein Eingabegerät geschaffen werden, mit dessen Hilfe es möglich ist, einen Schalter mittels eines Steuerhebels in mehrere Richtungen möglichst spielfrei zu betätigen. Der Steuerhebel soll in seiner Grundstellung (Nulllage) ein möglichst kleines Spiel aufweisen. Das Eingabegerät kann als Beispiel ein Gangwahlschalter sein.

Insbesondere sollen dabei folgende Punkte konstruktiv berücksichtigt werden:
- Kostengünstige Lösung.
- Geringe Anzahl von Bauteilen.
- Entkopplung der einzelnen Mechanismen für die Betätigung des Steuerhebels.
- Hohe Verschleißfestigkeit der Haptikgebenden Elemente.
- Geringe Baugröße.

Zu diesem Zweck ist eine Kulissenform für das Eingabegerät geschaffen, welche den Steuerhebel bzw. die Schaltwelle im System verspannt. Für die Fixierung der Nulllage des Steuerhebels im Eingabegerät ist dabei Nachfolgendes vorgesehen.

Die Schaltbewegung des Steuerhebels wird über den Schalthebel eingeleitet. Der Schalthebel sitzt auf der Schaltwelle. Die Schaltwelle ist über einen Lagerstift in dem Kreuzgelenk gelagert. Das Kreuzgelenk ist wiederum über Zapfen und Lagerschalen im Gehäuseunterteil gelagert. Diese Lagerung dient zur Entkopplung des Systems um ein Schalten horizontal sowie vertikal zu gewährleisten. Die einzelnen Lagerstellen sind als Spielpassungen ausgelegt.

In der Schaltwelle befindet sich ein Führungskanal für eine Druckfeder und einen Taster, wobei mittels der Druckfeder der Taster in die Kulissenbahn der Kulisse gedrückt wird. Die Kulisse enthält eine dreidimensionale(3D) Kontur, über welche die Haptik des Schalters erzeugt wird.

Die Signalumsetzung erfolgt mittels einer über ein Führungsbauteil auf der Schaltwelle gelagerten Codeplatte. Diese Codeplatte enthält verschiedene Magnetfelder, welche bei einer Verschiebung der Codeplatte eine Signalumkehrung an verschiedenen Hallsensoren, die auf einer im Gehäuseunterteil gelagerten Leiterplatte angebracht sind, einleiten.

An der Kulissenwand ist eine Nocke angespritzt, welche die Schaltwelle gegenüber der Kulisse und den restlichen Bauteilen leicht verspannt. Durch diese Verspannung wird das restliche Spiel in den einzelnen Lagerstellen minimiert und somit eine Optimierung des Nulllagenspiels der Schaltwelle bzw. des gesamten Schalthebels erreicht. Die Schaltwelle kann dadurch bei Einwirkung einer geringen Kraft nicht ausgelenkt werden (Nulllagenspiel).

Geschaffen ist somit ein Eingabegerät, welches eine Haptikkulisse mit Nocke zur Verspannung des Systems sowie eine verbesserte Nulllage aufweist.

Die mit der Erfindung erzielten Vorteile bestehen insbesondere in Folgendem:
- Durch die Verspannung mittels der Nocke wird die Schaltwelle sehr stark sowie sicher in ihrer Nulllage gehalten.
- Durch die angespritzte Nocke an einem Bauteil, welches ohnehin benötigt wird, nämlich die Kulisse, ist kein zusätzliches Bauteil erforderlich, womit es sich um eine kostengünstige Lösung handelt.
- Das Stellglied besitzt eine kompakte Bauweise, so dass es auch für einen beengten Einbauraum in einem Kraftfahrzeug geeignet ist.
- Fertigungstoleranzen der Bauteile haben keinen wesentlichen Einfluss auf das Nulllagen-Spiel des Wählhebels, was wiederum der Kostengünstigkeit für das Stellglied zugute kommt.

Ein Ausführungsbeispiel der Erfindung mit verschiedenen Weiterbildungen und Ausgestaltungen ist in den Zeichnungen dargestellt und wird im folgenden näher beschrieben. Es zeigen
Fig. 1 ein Stellglied in Draufsicht,
Fig. 2 einen Schnitt entlang der Linie 2-2 in Fig. 1,
Fig. 3 einen Schnitt entlang der Linie 3-3 in Fig. 2,
Fig. 4 einen Schnitt entlang der Linie 4-4 in Fig. 1 und
Fig. 5 einen vergrößerten Detailausschnitt aus Fig. 4.

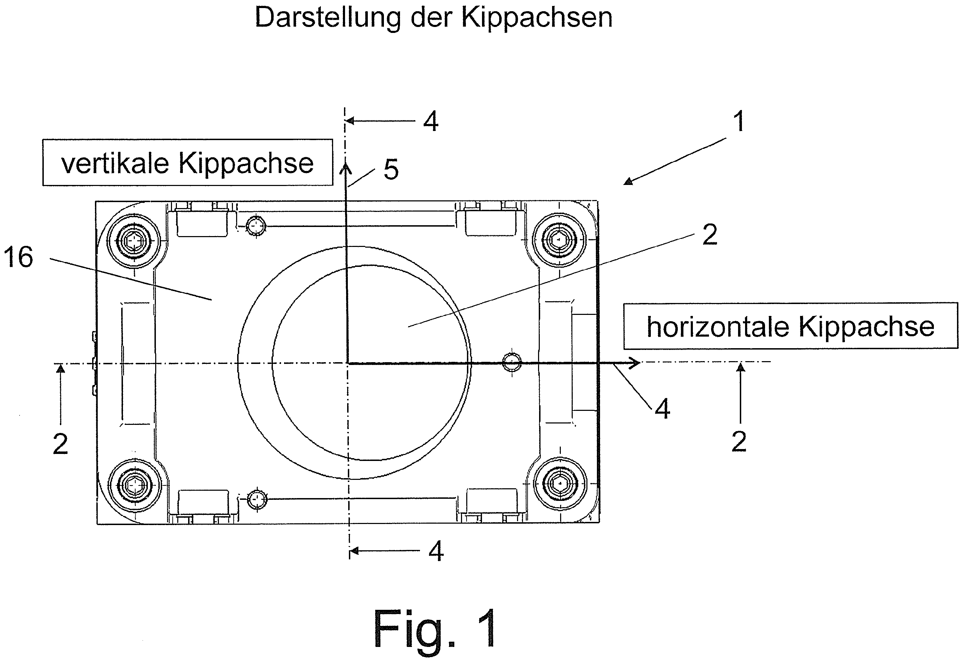

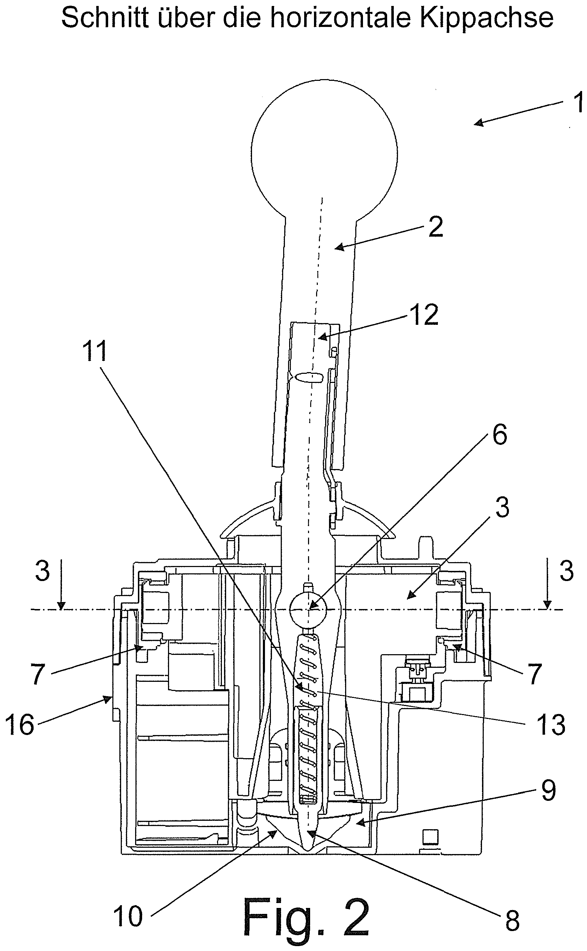

In Fig. 1 ist ein Stellglied 1 zu sehen, das zur manuellen Ansteuerung von Funktionen in einem Kraftfahrzeug dient und insbesondere als Gangwahlschalter für eine Shift-by-Wire-Schaltvorrichtung verwendet wird. Das Stellglied 1 ist mit einer bewegbaren Handhabe 2 in der Art eines Wählhebels versehen. Die Handhabe 2 ist beweglich an einem Träger 3 (siehe Fig. 2) derart gelagert, dass die Handhabe 2 in wenigstens eine Richtung, bevorzugterweise in zwei verschiedenen Richtungen 4, 5 aus einer neutralen Stellung verstellbar ist. Die Verstellung der Handhabe 2 kann dabei in zugehörige Verstellpositionen erfolgen, so dass dadurch die Handhabe 2 vom Benutzer manuell in die Verstellpositionen verstellbar ist. Bei entsprechender Verstellung der Handhabe 2 durch den Benutzer werden dabei die jeweils gewünschten Funktionen im Kraftfahrzeug ausgelöst und/oder angesteuert.

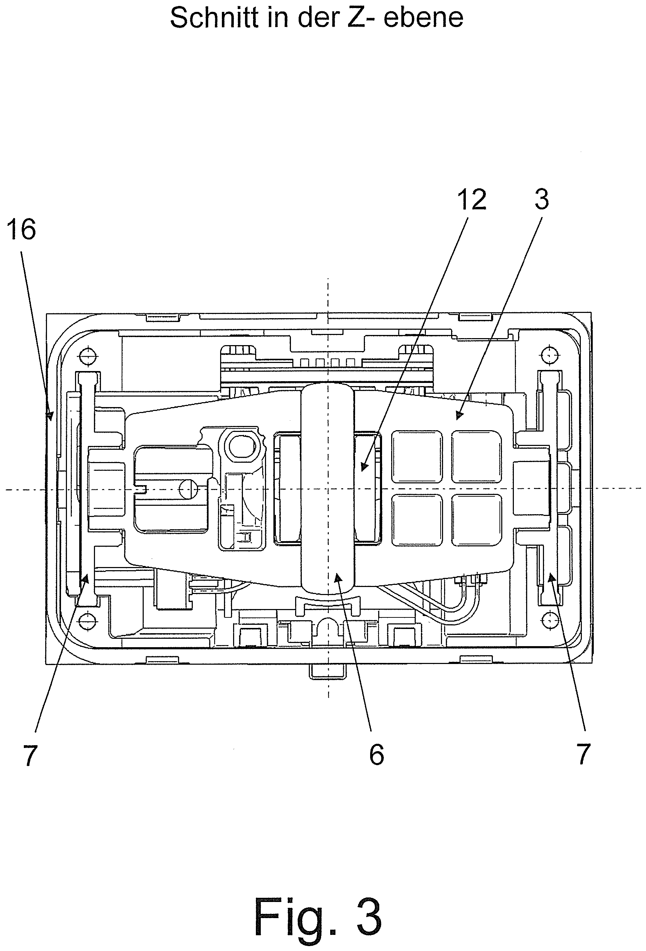

Vorliegend ist die Handhabe 2 mittels Verschwenkung bewegbar ausgestaltet, so dass es sich bei der Handhabe 2 um einen schwenkbaren Wählhebel handelt. Hierzu ist die Handhabe 2, wie in Fig. 2 zu sehen ist, mittels eines Lagerstifts 6 um eine erste Schwenkachse in die erste Schwenkrichtung 4 und mittels eines Lagers 7 in der Art von Zapfen und/oder Lagerschalen um eine zweite Schwenkachse in die zweite Schwenkrichtung 5 verstellbar. Weiter ist der Träger 3 für die Handhabe 2 als ein Kardangelenk beziehungsweise ein Kreuzgelenk ausgebildet, wie anhand der Fig. 3 zu erkennen ist, um die Verschwenkung in die jeweilige Schwenkrichtung 4, 5 zu gestatten. Dabei sind die Lagerstellen für den Lagerstift 6 und/oder für das Lager 7, also die Lagerstellen für das Kreuz- und/oder Kardangelenk 3, als Spielpassungen ausgestaltet.

Wie weiter der Fig. 2 zu entnehmen ist, wirkt mit der Handhabe 2 ein Druckelement 8 zusammen, wobei das Druckelement 8 in einer Kulissenbahn 10 einer Kulisse 9 geführt ist. Das Druckelement 8 weist ein elastisches Element 11 auf und ist folglich mit einer elastischen Kraft beaufschlagt. Aufgrund der Führung des Druckelements 8 in der Kulissenbahn 10 bei Verschwenkung der Handhabe 2 wirkt dadurch eine Rückstellkraft in Richtung der neutralen Stellung auf die Handhabe 2 bei deren Verstellung ein.

Die Handhabe 2 umfasst eine im Träger 3 schwenkbar gelagerte Schaltwelle 12, wie man anhand der Fig. 2 sieht. In der Schaltwelle 12 ist ein Führungskanal 13 für das elastische Element 11 zur Ausübung der elastischen Kraft sowie für das Druckelement 8 befindlich. Das elastische Element 11 besteht vorliegend aus einer Druckfeder. Bei dem Druckelement 8 handelt es sich vorliegend um einen Stift, einen Taster oder einen Zapfen. Das Stellglied 1 weist gemäß Fig. 1 weiterhin ein Gehäuse 16 auf, wobei die Schaltwelle 12 aus dem Gehäuse 16 zur manuellen Bedienung der Handhabe 2 durch den Benutzer herausragt, wie man anhand von Fig. 2 erkennt. Das Kreuz- und/oder Kardangelenk 3 ist wiederum mittels der Lager 7 beweglich im Gehäuse 16, in zwar im Unterteil des Gehäuses 16 gelagert.

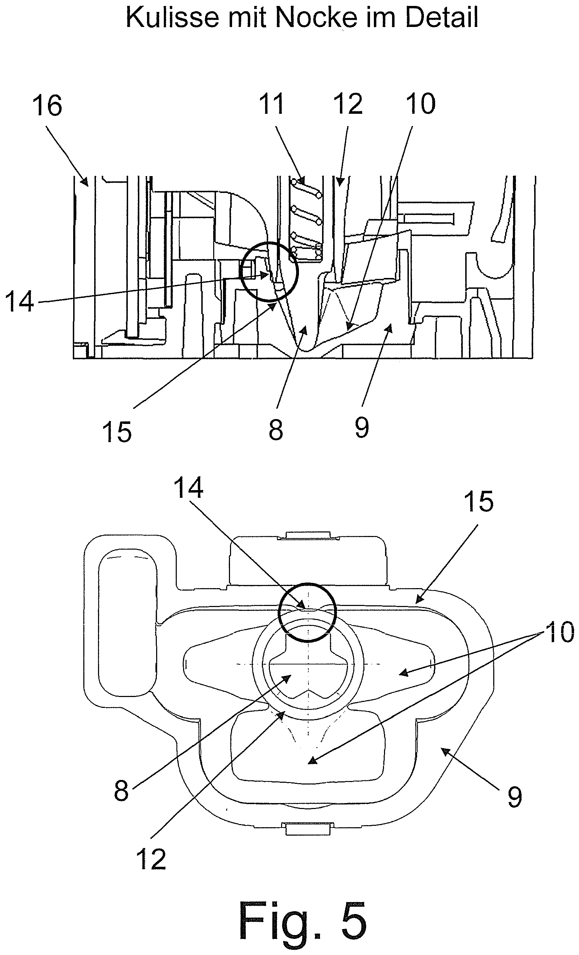

Wie man in Fig. 5 sieht, ist in der Kulisse 9 eine Nocke 14 befindlich. Die Nocke 14 wirkt derart auf die Handhabe 2, und zwar genauer auf die Schaltwelle 12 ein, dass die Handhabe 2 in der Kulisse 9 zur Verringerung des Bewegungsspiels der Handhabe 2 verspannt ist. Insbesondere wirkt die Nocke 14 in der neutralen Stellung derart auf die Handhabe 2 bzw. die Schaltwelle 12 ein, dass die Handhabe 2 in Richtung der Verstellung und/oder in Richtung zur Verstellposition verspannt ist. Aufgrund dieser Einwirkung wird eine Verringerung des Bewegungsspiels der Handhabe 2 in der neutralen Stellung erreicht. Die Nocke 14 ist an einer Kulissenwand 15 der Kulisse 9 befindlich, wobei die Kulissenwand 15 der Kulissenbahn 10 gegenüberliegen kann. Zweckmäßigerweise besteht die Kulisse 9 aus thermoplastischem Kunststoff und wird mittels Spritzgießen hergestellt. Die Nocke 14 ist dann an der Kulissenwand 15 bei Herstellung der Kulisse 9 mittels Spritzgießen angespritzt. Die Kulissenbahn 10 weist gemäß Fig. 5 eine 3D(dreidimensionale)-Kontur zur Erzeugung einer Haptik für die Verstellung der Handhabe 2 auf.

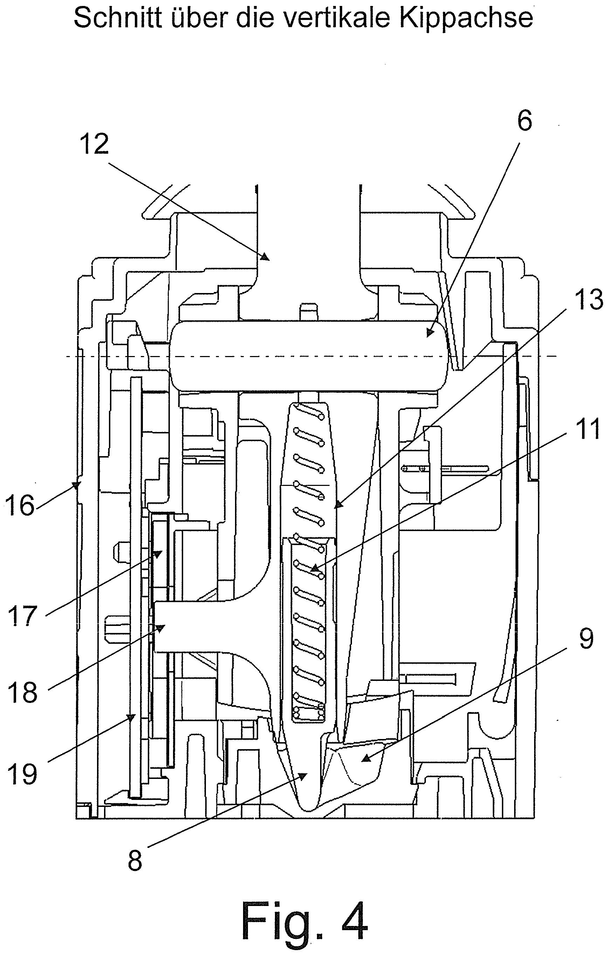

Das Stellglied 1 weist weiterhin ein Mittel zur Erfassung der Verstellung und/oder der Verstellposition bzw. der Verstellpositionen für die Handhabe 2 auf. Das Mittel zur Erfassung der Verstellung und/oder der Verstellpositionen umfasst einen die Verstellung und/oder die Verstellpositionen codierenden, in Fig. 4 gezeigten, geführt verschiebbaren Code-Träger 17 sowie einen die Codierung ermittelnden Sensor. Der Code-Träger 17 besteht aus einer magnetischen Codeplatte, die verschiedene, voneinander unterscheidbare Magnetfelder zur Codierung der Verstellung und/oder der Verstellpositionen beispielweise durch entsprechende Magnetspuren enthält. Der nicht weiter gezeigte Sensor besteht aus einem Magnetsensor, und zwar vorliegend aus mehreren Hallsensoren, an denen korrespondierend zur Verschiebung der Codeplatte 17 eine Signalumkehrung auftritt. Dadurch sind auch bei Vorhandensein von mehreren Verstellpositionen sämtliche Verstellpositionen der Handhabe 2 mittels des einen einzigen Code-Trägers 17 erfassbar beziehungsweise ist auch eine komplexe Bewegung der Handhabe 2 detektierbar. Der Code-Träger 17 ist über ein Führungsbauteil 18 an der Schaltwelle 12 gelagert, womit der Code-Träger 17 korrespondierend zur Verstellung der Schaltwelle 12 verschiebbar ist. Die Hallsensoren sind auf einer im Gehäuse 16 gelagerten Leiterplatte 19 angebracht.

Ein derartiges Stellglied 1 lässt sich für einen Gangwahlschalter in Kraftfahrzeugen verwenden. Bei einer solchen Shift-by-Wire-Schaltvorrichtung für das Getriebe im Kraftfahrzeug handelt es sich bei der Handhabe 2 um den Wählhebel für die Shift-by-Wire-Schaltvorrichtung und die Shift-by-Wire-Schaltvorrichtung erzeugt zur Stellung der Handhabe 2 korrespondierende Signale, wobei die Signale zur Steuerung des Getriebes dienen. Die Erfindung ist jedoch nicht auf das beschriebene und dargestellte Ausführungsbeispiel beschränkt. Sie umfasst vielmehr auch alle fachmännischen Weiterbildungen im Rahmen der durch die Patentansprüche definierten Erfindung. Neben Kraftfahrzeuganwendungen kann ein derartiges Stellglied 1 in vorteilhafter Weise auch als Eingabemittel für Computer, Werkzeugmaschinen, Haushaltsgeräte o. dgl. eingesetzt werden.

Bezugszeichen-Liste:
- 1:: Stellglied
- 2:: Handhabe
- 3:: Träger / Kreuz- und/oder Kardangelenk
- 4, 5:: Richtung / Schwenkrichtung
- 6:: Lagerstift
- 7:: Lager
- 8:: Druckelement
- 9:: Kulisse
- 10:: Kulissenbahn
- 11:: elastisches Element
- 12:: Schaltwelle
- 13:: Führungskanal
- 14:: Nocke
- 15:: Kulissenwand
- 16:: Gehäuse
- 17:: Codeträger / Codeplatte
- 18:: Führungsbauteil
- 19:: Leiterplatte

## Patentansprüche

1. Stellglied, insbesondere Schaltvorrichtung zur manuellen Ansteuerung und/oder Auslösung von Funktionen in einem Kraftfahrzeug, mit einer Handhabe (2), wobei die Handhabe (2) an einem Träger (3) derart gelagert ist, dass die Handhabe (2) in wenigstens eine Richtung (4, 5) aus einer neutralen Stellung, insbesondere in eine Verstellposition, verstellbar ist, mit einem mit der Handhabe (2) zusammenwirkenden, in einer Kulissenbahn (10) einer Kulisse (9) geführten sowie mit einer elastischen Kraft beaufschlagten Druckelement (8), insbesondere derart dass eine Rückstellkraft in Richtung der neutralen Stellung auf die Handhabe (2) bei deren Verstellung einwirkt, und mit einem derart auf die Handhabe (2) einwirkenden Mittel, dass die Handhabe (2) in der Kulisse (9) zur Verringerung des Bewegungsspiels der Handhabe (2) verspannt ist, **dadurch gekennzeichnet, dass** das auf die Handhabe (2) verspannend einwirkende Mittel als eine Nocke (14) ausgebildet ist, dass die Nocke (14) in der Kulisse (9) befindlich ist, und dass die Nocke (14) an einer der Kulissenbahn (10) gegenüberliegenden Kulissenwand (15) der Kulisse (9) befindlich ist.

2. Stellglied nach Anspruch 1, **dadurch gekennzeichnet, dass** die Nocke (14) in der neutralen Stellung zur Verringerung des Bewegungsspiels auf die Handhabe (2) einwirkt, derart dass die Handhabe (2) in Richtung der Verstellung und/oder zur Verstellposition verspannt ist.

3. Stellglied nach Anspruch 1 oder 2, **dadurch gekennzeichnet, dass** die Handhabe (2) um eine erste und/oder eine zweite Schwenkachse in eine erste und/oder eine zweite Schwenkrichtung (4, 5) verstellbar ist, dass es sich vorzugsweise bei der Handhabe (2) um einen schwenkbaren Wählhebel handelt, und dass weiter vorzugsweise der Träger (3) für die Handhabe (2) als ein Kreuz- und/oder Kardangelenk ausgebildet ist.

4. Stellglied nach Anspruch 1, 2 oder 3, **dadurch gekennzeichnet, dass** ein Gehäuse (16) vorgesehen ist, dass vorzugsweise die Handhabe (2) eine im Träger (3) schwenkbar gelagerte Schaltwelle (12) umfasst, und dass weiter vorzugsweise die Schaltwelle (12) aus dem Gehäuse (16) zur manuellen Bedienung der Handhabe (2) durch den Benutzer herausragt.

5. Stellglied nach Anspruch 4, **dadurch gekennzeichnet, dass** die Schaltwelle (12) mittels eines Lagerstifts (6) bewegbar im Kreuz- und/oder Kardangelenk (3) gelagert ist, dass vorzugsweise das Kreuz- und/oder Kardangelenk (3) mittels Zapfen und/oder Lagerschalen beweglich im Gehäuse (16) gelagert ist, und dass weiter vorzugsweise die Lagerstellen für den Lagerstift (6) und/oder für das Kreuz- und/oder Kardangelenk (3) als Spielpassungen ausgestaltet sind.

6. Stellglied nach einem der Ansprüche 4 bis 5, **dadurch gekennzeichnet, dass** in der Schaltwelle (12) ein Führungskanal (13) für ein elastisches Element (11) zur Ausübung der elastischen Kraft sowie für das Druckelement (8) befindlich ist, dass vorzugsweise das elastische Element (11) aus einer Druckfeder besteht, und dass es sich weiter vorzugsweise bei dem Druckelement (8) um einen Stift oder einen Taster handelt.

7. Stellglied nach einem der Ansprüche 1 bis 6, **dadurch gekennzeichnet, dass** die Kulisse (9) aus thermoplastischem Kunststoff besteht, dass vorzugsweise die Nocke (14) an der Kulissenwand (15) bei Herstellung der Kulisse (9) mittels Spritzgießen angespritzt ist, und dass weiter vorzugsweise die Kulissenbahn (10) eine 3D(dreidimensionale)-Kontur zur Erzeugung einer Haptik für die Verstellung der Handhabe (2) aufweist.

8. Stellglied nach einem der Ansprüche 1 bis 7, **dadurch gekennzeichnet, dass** ein Mittel zur Erfassung der Verstellung und/oder der Verstellposition vorgesehen ist, und dass vorzugsweise das Mittel zur Erfassung der Verstellung und/oder der Verstellposition einen die Verstellung und/oder die Verstellposition codierenden Code-Träger (17) sowie einen die Codierung ermittelnden Sensor umfasst, insbesondere derart dass bei mehreren Verstellpositionen sämtliche Verstellpositionen mittels des einen Code-Trägers (17) erfassbar sind.

9. Stellglied nach Anspruch 8, **dadurch gekennzeichnet, dass** der Code-Träger (17) aus einer magnetischen Code-Platte, die insbesondere verschiedene Magnetfelder enthält, sowie der Sensor aus einem Magnetsensor, insbesondere aus mehreren Hallsensoren, an denen bei einer Verschiebung des Code-Trägers (17) eine Signalumkehrung auftritt, bestehen, dass vorzugsweise der Code-Träger (17) über ein Führungsbauteil (18) an der Schaltwelle (12) gelagert ist, und dass weiter vorzugsweise die Hallsensoren auf einer im Gehäuse (16) gelagerten Leiterplatte (19) angebracht sind.

## Claims

1. A control element, in particular a switching device, for manually controlling and/or triggering functions in a motor vehicle, comprising a handle (2), wherein the handle (2) is mounted on a support (3) in such a way that the handle (2) can be adjusted in at least one direction (4, 5) from a neutral position, in particular into an adjustment position, comprising a pressure element (8), which cooperates with the handle (2) and which is guided in a gate path (10) of a gate (9) and to which an elastic force is applied, in particular in such a way that a restoring force acts on the handle (2) in the direction of the neutral position when said handle is adjusted, and comprising a means, which acts on the handle (2) in such a way that the handle (2) is tensioned in the gate (9) in order to reduce the movement play of the handle (2), **characterized in that** the means, which acts on the handle (2) in a tensioning manner, is formed as a cam (14), that the cam (14) is located in the gate (9), and that the cam (14) is located at a gate wall (15) of the gate (9) located opposite the gate path (10).

2. The control element according to claim 1, **characterized in that** the cam (14) acts on the handle (2) in the neutral position in order to reduce the movement play in such a way that the handle (2) is tensioned in the direction of the adjustment and/or towards the adjustment position.

3. The control element according to claim 1 or 2, **characterized in that** the handle (2) can be adjusted in a first and/or second pivoting direction (4, 5) about a first and/or a second pivot axis, that the handle (2) is preferably a pivotable selector lever, and that the support (3) for the handle (2) is further preferably formed as universal and/or cardan joint.

4. The control element according to claim 1, 2, or 3, **characterized in that** a housing (16) is provided, that the handle (2) preferably comprises a gearshift lever shaft (12), which is pivotably mounted in the support (3), and that the gearshift lever shaft (12) further preferably projects out of the housing (16) for manually operating the handle (2) by the user.

5. The control element according to claim 4, **characterized in that** the gearshift lever shaft (12) is movably mounted in the universal and/or cardan joint (3) by means of a bearing pin (6), that the universal and/or cardan joint (3) is preferably movably mounted in the housing (16) by means of journals and/or bearing shells, and that the bearing points for the bearing pin (6) and/or for the universal and/or cardan joint (3) are further preferably designed as clearance fits.

6. The control element according to any one of claims 4 to 5, **characterized in that** a guide duct (13) for an elastic element (11) for exerting the elastic force as well as for the pressure element (8) is located in the gearshift lever shaft (12), that the elastic element (11) preferably consists of a pressure spring, and that the pressure element (8) is further preferably a pin or a button.

7. The control element according to any one of claims 1 to 6, **characterized in that** the gate (9) consists of thermoplastic plastic, that the cam (14) is preferably injection molded to the gate wall (15) by means of injection molding during the production of the gate (9), and that the gate path (10) further preferably has a 3D (three-dimensional) contour for generating a haptic for the adjustment of the handle (2).

8. The control element according to any one of claims 1 to 7, **characterized in that** a means for detecting the adjustment and/or the adjustment position is provided, and that the means for detecting the adjustment and/or the adjustment position preferably comprises a code carrier (17), which encodes the adjustment and/or the adjustment position, as well as a sensor, which determines the encoding, in particular in such a way that in the case of several adjustment positions, all adjustment positions can be detected by means of the one code carrier (17).

9. The control element according to claim 8, **characterized in that** the code carrier (17) consists of a magnetic code plate, which in particular contains various magnetic fields, and the sensor consists of a magnetic sensor, in particular of several Hall sensors, at which a signal reversal occurs in response to a displacement of the code carrier (17), that the code carrier (17) is preferably mounted on the gearshift lever shaft (12) via a guide component (18), and that the Hall sensors are further preferably attached to a printed circuit board (19) mounted in the housing (16).

## Revendications

1. Actionneur, en particulier dispositif de commutation pour la commande manuelle et/ou le déclenchement de fonctions dans un véhicule, avec une manette (2), la manette (2) étant montée sur un support (3) de telle sorte que la manette (2) soit réglable au moins dans une direction (4, 5) à partir d'une position neutre, en particulier dans une position de réglage, avec un élément de pression (8) en interaction avec la manette (2), guidé dans une voie de coulisse (10) d'une coulisse (9) et soumis à une force élastique, en particulier de telle sorte qu'une force de rappel agisse sur la manette (2) en direction de la position neutre lors du réglage, et avec un moyen agissant sur la manette (2) de telle sorte que la manette (2) soit contrainte dans la coulisse (9) pour réduire le jeu de mouvement de la manette (2), **caractérisé en ce que**
le moyen agissant par contrainte sur la manette (2) est conçu comme une came (14), que la came (14) se trouve dans la coulisse (9) et que la came (14) se trouve sur une paroi de coulisse (15) de la coulisse (9), située à l'opposé de la voie de coulisse (10).

2. Actionneur conformément à la revendication 1, **caractérisé en ce que** la came (14) agit sur la manette (2) en position neutre pour réduire le jeu de mouvement de telle sorte que la manette (2) soit contrainte dans la direction du réglage et/ou pour la position de réglage.

3. Actionneur conformément à la revendication 1 ou 2, **caractérisé en ce que** la manette (2) est réglable dans un premier et/ou deuxième sens de pivotement (4, 5) autour d'un premier et/ou deuxième axe de pivotement, que préférablement la manette (2) est un levier sélecteur pivotant et que, plus préférablement le support (3) pour la manette (2) est conçu comme une articulation en croix et/ou à cardan.

4. Actionneur conformément à la revendication 1, 2 ou 3, **caractérisé en ce qu'**un boîtier (16) est prévu, que préférablement la manette (2) comprend un arbre de commande (12) supporté de manière à pouvoir pivoter dans le support (3) et que, plus préférablement l'arbre de commande (12) dépasse du boîtier (16) pour la commande manuelle de la manette (2) par l'utilisateur.

5. Actionneur conformément à la revendication 4,
**caractérisé en ce que**
l'arbre de commande (12) est supporté de façon mobile dans l'articulation en croix et/ou à cardan (3) au moyen d'un axe de support (6), que préférablement l'articulation en croix et/ou à cardan (3) est supportée de façon mobile dans le boîtier (16) au moyen de tourillons et/ou de coussinets de palier et que, plus préférablement les points d'appui pour l'axe de support (6) et/ou pour l'articulation en croix et/ou à cardan (3) sont conçus comme ajustements avec jeu.

6. Actionneur conformément à l'une des revendications 4 à 5,
**caractérisé en ce que**
dans l'arbre de commande (12) se trouve un conduit de guidage (13) pour un élément élastique (11) pour exercer la force élastique et pour l'élément de pression (8), que préférablement l'élément élastique (11) se compose d'un ressort de compression et que, plus préférablement l'élément de pression (8) est une tige ou un poussoir.

7. Actionneur conformément à l'une des revendications 1 à 6, **caractérisé en ce que** la coulisse (9) est en matière synthétique thermoplastique, que préférablement la came (14) est moulée par procédé de moulage par injection sur la paroi de coulisse (15) lors de la fabrication de la coulisse (9) et que, plus préférablement la voie de coulisse (10) présente un profil en 3 D (tridimensionnel) pour générer une perception haptique pour le réglage de la manette (2).

8. Actionneur conformément à l'une des revendications 1 à 7, **caractérisé en ce qu'**un moyen pour l'enregistrement du réglage et/ou de la position de réglage est prévu et que, préférablement le moyen pour l'enregistrement du réglage et/ou de la position de réglage comprend un porte-code (17) codant le réglage et/ou la position de réglage, ainsi qu'un capteur déterminant le codage, en particulier de telle sorte que, dans le cas de plusieurs positions de réglage, toutes les positions de réglage puissent être enregistrées au moyen du porte-code (17).

9. Actionneur conformément à la revendication 8,
**caractérisé en ce que**
le porte-code (17) se compose d'une plaque de codage magnétique qui contient en particulier plusieurs champs magnétiques, et que le capteur se compose d'un capteur magnétique, en particulier de plusieurs capteurs à effet Hall, sur lesquels il se produit une inversion de signaux dans le cas d'un déplacement du porte-code (17), que préférablement le porte-code (17) est monté sur l'arbre de commande (12) au-dessus d'une pièce de guidage (18) et que, plus préférablement les capteurs à effet Hall sont montés sur un circuit imprimé (19) supporté dans le boîtier (16).
